# EUROPEAN PATENT SPECIFICATION

(11) **EP 2 725 897 B1**
(45) Date of publication and mention of the grant of the patent: **14.11.2018**
(21) Application number: 12730785.8
(22) Date of filing: 22.06.2012
(51) Int. Cl.: A01M 23/38

(54) **PEST ELECTROCUTION DEVICE**
VORRICHTUNG ZUR TÖTUNG VON SCHÄDLINGEN DURCH STROMSCHLÄGE
DISPOSITIF D'ÉLECTROCUTION D'ANIMAUX NUISIBLES

(30) Priority: 29.06.2011 DK 201170336
(43) Date of publication of application: 07.05.2014
(73) Proprietor: Ratèl APS, 6000 Kolding (DK)
(72) Inventor: KNUDSEN, Hans, 6000 Kolding (DK); THIIM, Christian, 7400 Herning (DK)
(74) Representative: Larsen & Birkeholm A/S
(86) International application number: PCT/DK2012/050209
(87) International publication number: WO 2013/000467

(56) References cited:
- WO-A2-2010/130262
- US-A- 2 519 783
- US-A1- 2010 146 839

## Description

### Field of the Invention

The present invention relates to a pest electrocution device as well as a method of electrocuting a pest using such a device, and a method for mounting the novel and inventive device in a pipe or conduit.

### Background of the Invention

The number of pests and in particular rodents such as rats and mice is an ever increasing problem. In particular, rats have adapted to life in the sewer systems to such a degree that the old and deteriorating sewer systems present in many cities around the world provides premium habitat for rats. This results in an ever increasing number of rats increasing the problems associated with rats such as spread of disease, unhygienic conditions, increased deterioration of sewer systems etc.

Consequently, a number of devices has been developed and deployed in order to try to minimize both the spread of rats in the sewer system and different ways of exterminating the rats present in the sewer system.

In order to exterminate the rats different methods have been utilized such as for example using poison, mechanical devices which will skewer the rats and electrical electrocution systems as suggested in the same applicant's published PCT-application WO 2010/130262.

The various methods all rely on the fact that the liquid in the sewer system will flush away the dead rats, which also in practice seems to work.

A problem with the pest extermination devices relying on the use of a poison is the fact that the rats have a tendency to grow immune or resistant against the poison such that after a while new poisons have to be implemented or developed, and the effective usefulness of these devices is usually relatively short-term.

The type of device which skewers the rat is very inhumane in that unless the rat is positioned precisely relative to the skewers, the rat will be maimed and will hopefully eventually die from its injuries. Otherwise the rat will be handicapped, but still be a pest in the sewer system.

The devices relying on electrocution are reliable and usually very effective. One problem, however, is the fact that the sewer systems usually present a very moist/humid and aggressive environment and that the electronics and mechanics implemented in these devices are relatively sensitive to the environment in the sewer system and as such will experience a shorter life expectancy than expected.

### Object of the Invention

It is therefore an object of the present invention to provide a simplified electrocution device which is reliable and which in a fast and effective way exterminates especially rats entering the device.

### Description of the Invention

The invention addresses this need by providing a pest electrocution device according to claim 1 suitable to be mounted in a pipe or conduit, wherein the electrocution device comprises a ramp hingely attached to a chassis, which chassis has means to be fastened to said pipe or conduit, where said chassis further comprises a chassis arm, and a tunnel element, which tunnel element is pivotably fastened to said chassis arm, and where the tunnel element in a first position extends to an upper end of said ramp, such that a pest travelling up the ramp can enter the tunnel element at a first end, where activating means are provided inside the tunnel element, which activation means are suitable to activate at least three electrodes by supplying electrical current to said electrodes arranged as separate floor plates in the tunnel, such that after activation and a predetermined period of time, the tunnel element is suitable to pivot the first end downwards into a second position, in which second position the electrocuted pest slides out of the tunnel element, after which the tunnel element is suitable to be pivoted back in its first position.

In comparison to prior art devices the inventive device according to the present invention has very few movable parts and as such is very reliable and simple to construct and maintain.

The fact that especially rats by nature are looking for safe and relatively dry hiding places in order to build nests is utilized in providing the ramp in connection with the tunnel such that the rat will recognize a potential nesting place and therefore enter the tunnel.

Furthermore the ramp also acts to block the sewer pipe for the rat's progress, such that in order to circumvent the obstacle (the ramp) the rat will be inclined to enter the tunnel.

As the rat enters the tunnel, the rat will touch and thereby move the activation means inside the tunnel which will cause the electrodes to be electrified thereby electrocuting the rat. Tests with this device and the prior art device indicate that as soon as the rat is subjected to a high voltage it will not be able to move (some rats will move slightly forward). Therefore, the rat will be firmly placed on the electrodes and be quickly and thoroughly executed. When the rat is dead, the tunnel will pivot into a second position whereby the rat will slide out of the tunnel and into the main sewer. The sewage will carry the rat away and the tunnel will pivot back into its original position such that it will be ready for the following rodent.

The pivotal action is a simple mechanical movement, and by suspending the tunnel elements substantially at its balance point only a very limited force and thereby a very limited power consumption is needed in order to first of all maintain the tunnel in its first position, but also in order to pivot the tunnel.

In a further advantageous embodiment the tunnel is hingely connected to the chassis arm by means of an axle and where a motor is attached to the axle for rotation of said axle, where the motor is controlled by a control unit, which control unit receives input from the activating means inside the tunnel, where the motor pivots the tunnel between the first position and the second position. The motor arranged on the axle provides for a simple mechanical construction which in use is very reliable and it is easy to adjust the angular movement of the axle in order to provide the pivotal movement of the tunnel sufficient to make the rats slide out of the tunnel.

In a further advantageous embodiment the axle is arranged on an upper side of the tunnel element such that the tunnel element is substantially horizontal, when not influenced by the motor. By this arrangement is achieved that the tunnel can pivot freely and that the axle does not interfere with the cross section of the tunnel as such or that the suspension of the axle interferes with the free movement of the tunnel element.

In a still further advantageous embodiment of the invention the ramp is made from a buoyant material such as polyurethane, wood, or plastic, preferably a hollow buoyant plastic construction.

The ramp's buoyancy in combination with the ramp being hingely mounted to the chassis foresees that the ramp will follow the level of the liquid in the sewer and as such will not block the sewer or hinder the transport of sewage.

In a still further advantageous embodiment the device inside the tunnel is provided with a further pipe element which is coaxially arranged, such that a pest entering the device via the ramp will enter the pipe element, where the at least three electrodes are suspended or placed on the floor of the pipe element with a gap between each electrode, and where superposed the gaps an aperture is provided in the pipe elements' bottom and a vertical distance up the pipe element, where the vertical distance is larger than the vertical extent of the electrodes.

The distance from the floor of the pipe element to the upper extend of the aperture is therefore larger than the vertical distance to the top of the electrodes.

The pipe element makes it possible to arrange the electrical wiring etc. between the pipe element and the tunnel element, i.e. out of reach from the rodents in the sewer system and the aggressive environment, and at the same time by providing the apertures between the gaps where the aperture also has a vertical extent above the electrodes, it is ensured that moisture or debris in the pipe element does not short-circuit two electrodes and thereby render the device useless. The gaps will effectively drain any moisture/liquid away from the pipe element and into the tunnel such that as the tunnel is pivoted into its second position, the liquid will drain out of the tunnel element whereby the tunnel and the pipe element will be substantially dry thereby avoiding leak currents.

The tunnel may also be provided with drain holes in the bottom for drainage, even though the pipe is not pivoted.

In a further advantageous embodiment the activating means is a member suspended in the tunnel or pipe element, which member is engaged by the pest after entering the tunnel or pipe element, where said member has downwards projecting resilient sub-elements, where the activation of the activating means occurs when the member suspended in the tunnel is rotated relative to the tunnel axis.

In practice, the resilient sub-elements are in the shape of reinforced rubber or plastic strips which are sufficiently stiff to be moved by the rat, but will not hold the rat as the tunnel is pivoted thereby hindering the sliding out of the rat into the sewer. In early test models the activating means were stainless steel, and it indicated that as the tunnel tilted, the activating means would have a "barb" effect fixating the rat inside the tunnel thereby rendering it useless for further executions.

In a still further advantageous embodiment of the invention a transformer is provided on the chassis arm, where said transformer is electrically connected to a source of electricity, and where said control unit controls the transformer to supply power to the electrodes and the motor, where the electrodes initially is provided with a voltage of at least 3000 V, more preferred more than 3500 V and most preferred 4000V or more, and where the voltage decreases to between 100 to 300 V, more preferred 120 to 180 V and most preferred 130 to 160 V, and that the current increases during the electrocution cycle.

One of the objects of the present invention is to reliably and relatively quickly execute the pest such that a safe execution is achieved and at the same time a reliable execution and emptying of the device is achieved. Tests have indicated that by initially using a voltage of around 4000V, after which the voltage due to the pest being present on the electrodes will fall to approx. 150V, where the entire duration of the electrocution process is approx. 2 minutes, provides a very reliable execution cycle. In fact, a 100 % success rate was obtained for tests carried out over a 2 month period exterminating approx. 500 rats.

As the rat steps on the electrodes a current will travel through the rat, whereby the voltage will decrease and the current increase. Therefore the control unit will be adjusted/programmed to initially supply the transformer with energy such that a voltage of approx. 4000 V will be available for the initial part of the electrocution cycle. Furthermore it is to be understood that the circuitry is dimensioned not to short-circuit.

In a further advantageous embodiment the ramp is pivotally arranged on the chassis where a counterweight is provided in connection with the ramp. The pivotable ramp in connection with the counterweight foresees that the ramp may be relatively heavy and thereby provide the feeling to the pests that a safe and unproblematic ascent is provided when the pests are travelling along the sewer looking for hiding places or places to nest. The counterweight provided enables the pivotable movement of the ramp to be substantially effortless in that any liquid in the sewer will due to the buoyancy of the ramp material pivot the ramp such that it will always be floating substantially on or very close to the surface of the liquid.

In a still further advantageous embodiment of the invention a mounting shield is provided projecting from the chassis, where said shield projects in a direction opposite to the tunnel, where the mounting shield has a shape corresponding to an upper section of the pipe or conduit into which the device is to be mounted.

The mounting shield is designed to be insertable into the pipe or conduit in connection with which the pest electrocution device is to be mounted. The shield has a shape substantially corresponding to an upper part of the pipe or conduit such that when the pest electrocution device is urged upwards, the mounting shield is urged against the upper part of the pipe or conduit. Optionally, the shield may be provided with means for increasing the resistance between the shield and the pipe's surface such that the device is not easily dislodged.

The mounting tool typically consists of a number of parts where the mounting tool in the first end is provided with attachment means for attaching the tool to an upper part of the electrocution device. The electrocution device may for this purpose be provided with a special feature which will firmly engage the mounting tool. In the opposite end of the mounting tool means are provided either for hooking the mounting tool onto the rim of the manhole or for fastening the mounting tool to an inner side of a manhole adjacent the upper rim of the manhole. Between the first end and the second end is at least provided a resilient section shorter than the distance between the electrocution device and the place of mounting, i.e. adjacent the rim or the rim itself such that when the mounting tool is fastened to the electrocution device and pulled upwards, the resilient section will be tensioned thereby urging the mounting shield on the electrocution device against an upper part of the pipe or conduit into which the electrocution device is to be mounted.

In order to standardize the mounting tool as much as possible it is foreseen that a number of pipe sections may be provided such that the mounting tool may be constructed from the attachment means in one end, the resilient section, a suitable number of pipe sections and the attachment section to the manhole rim or manhole wall adjacent the rim. In this manner the mounting tool is easily adaptable to all circumstances, i.e. to all depths of conduits or pipes.

The invention is also directed to a method according to claim 10 for electrocuting a pest such as a rat or other rodent present in a pipe or conduit, where a pest electrocution device as described above is arranged in the pipe or conduit, such that the ramp blocks a substantial part of the pipe's or conduit's cross section, where the pest will travel up the ramp and into the device, where when the pest moves the activating means suspended in the tunnel or pipe element an input is generated and transmitted to the control unit, which control unit activates the transformer to initially supply the electrodes with a current for approx 120 seconds after which the motor means is activated, rotating the tunnel from the first position to the second position, in which second position the electrocuted pest slides out of the tunnel or pipe element, after which the tunnel pivots back into its first position.

The invention is furthermore directed at a method according to claim 11 for mounting a pest electrocution device as described above in a manhole having branch pipes or conduits, where on an upper part of the device an attachment device is provided for a mounting tool, where the mounting shield on the chassis is inserted in a branch pipe or conduit, and the mounting tool comprises at least one resilient section, such that one end of the mounting tool when the other end is mounted on the attachment device may be extended to the rim or immediately adjacent the rim where the resilient section creates tension in the mounting tool, for releasably fastening to the manhole, thereby squeezing the mounting shield against an upper part of the branch pipe or conduit, thereby fastening the device relative to the branch pipe or conduit.

By being able to install the electrocution device from the surface it is possible to install the device in manholes which are not accessible for personnel. Furthermore, the easy installation utilizing the resilient properties of the mounting tool also allows for easy removal, for example for service or inspection purposes such that inspection and service may be carried out above ground.

In the embodiments described above and which will be further elaborated below, the invention is described with reference to a device having one ramp. The invention however is also contemplated using a ramp and a blocking member, substantially corresponding in shape to the ramp, but displaced upstream (i.e. under the device). The blocking member is also pivotably attached to the device. Both the blocking member and the ramp may therefore pivot, when liquid and/or objects are moving downstream passing the ramp and blocking member. However, the ramp and blocking member are coupled together by a locking mechanism, such that the ramp cannot be pivoted . A rat passing upstream consequently cannot remove the ramp and pass under the device, but will have to travel up the ramp and into the device.

An example of a locking mechanism suitable for this arrangement is suggested in the same applicants' prior but non-published patent application PA201170685.

### Description of the Drawing

The invention will now be described with reference to the accompanying drawings in which
- Figure 1: illustrates a pest electrocution device mounted in a branch pipe accessible through a manhole
- Figure 2: illustrates the pest electrocution device in its second position where the tunnel is pivoted relative to the chassis
- Figure 3: illustrates a further view of the device according to the invention
- Figure 4: illustrates a device arranged in a manhole

### Detailed Description of the Invention

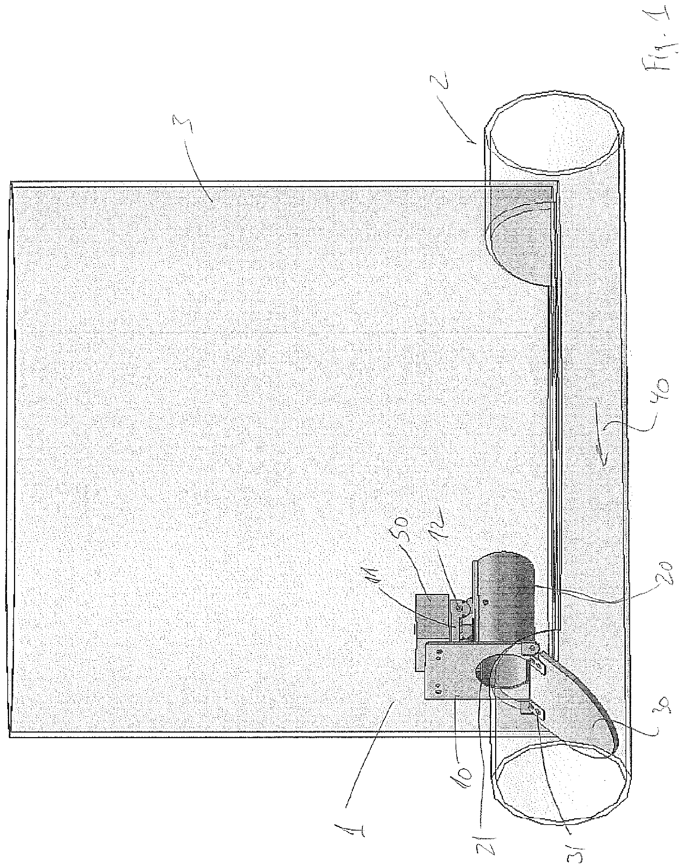

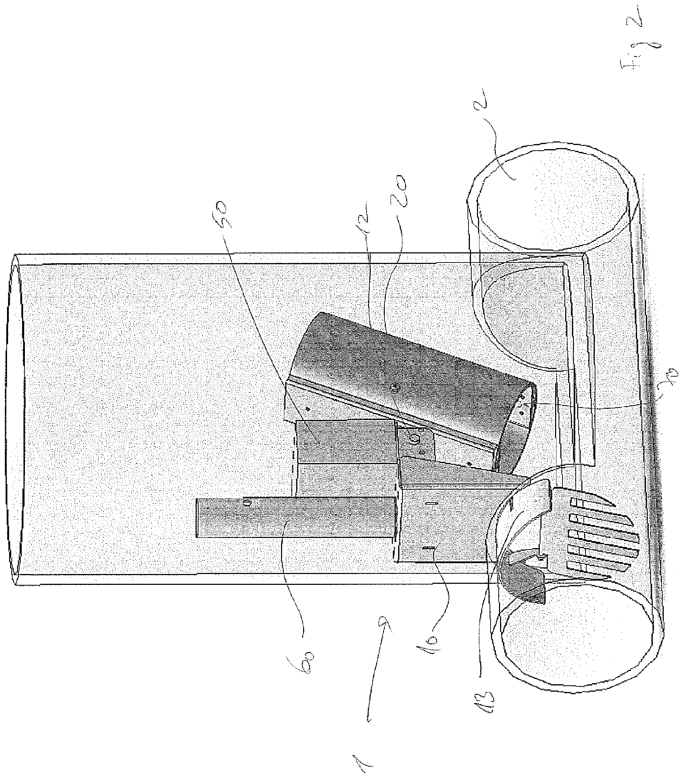

In figure 1 is illustrated a pest electrocution device 1 mounted in a branch pipe 2 accessible through a manhole 3. The manhole and the pipe/conduit 2 are illustrated as transparent members, but of course in real life they are typically made from plastic or concrete. The pest electrocution device 1 in broad terms comprises a chassis 10 which chassis 10 has a chassis arm 11. By means of an axle 12 a tunnel element 20 is pivotally mounted to the chassis arm 11 such that the tunnel element may pivot relative to the chassis arm 11 as illustrated with reference to figure 2.

In front of the opening 21 of the tunnel 20 is provided a ramp 30 which by means of hinges 31 is pivotally connected to the chassis 10. As liquid flows in the conduit 2 in the direction indicated by the arrow 40, the ramp 30 will be able to pivot thereby not blocking the liquid but on the other hand allowing a pest such as for example a rat to climb the ramp and enter the tunnel 20.

On top of the chassis arm 11 is arranged an electrical connection box 50 which houses all the electrical circuitry and transformer means necessary for carrying out an electrocution cycle as will be explained below.

In figure 2 is illustrated the pest electrocution device in its second position where the tunnel 20 is pivoted relative to the chassis. In the illustrated position any dead pests, such as for example a rat executed inside the tunnel element 20 will slide out of the tunnel element and into the bottom of the conduit 2 and be carried away by any liquid flow in the sewer system.

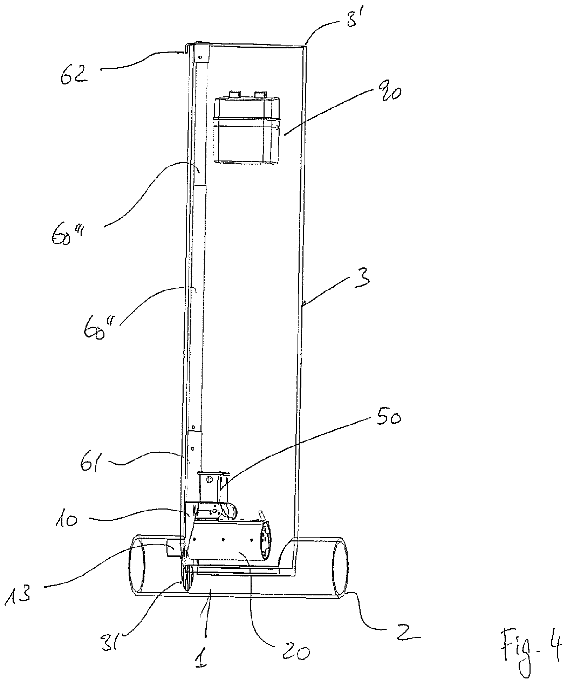

The mounting tool 60 used for installing and mounting the device is in this embodiment is fastened to the chassis. The chassis 10 is furthermore provided with a mounting shield 13 which mounting shield is shaped such that when urged against the upper part of the conduit 2 it will fit snugly against the upper part of the conduit thereby fixing the electrocution device 1 relative to the manhole and conduit. The mounting tool will be explained below with reference to figure 4. The force urging the mounting shield 13 against the upper part of the conduit 2 is provided by a resilient element being part of the mounting tool 60 as will be explained further below.

Inside the tunnel element 20 is provided three electrodes 70, 71, 72 of which only one is visible in figure 2. The electrodes 70, 71, 72 are connected to a source of electricity, for example in the shape of a transformer connected to a battery which transformer is controlled by a control circuit also arranged inside the electrical connection box 50 or in a box close to the upper rim of the manhole. The electrical circuitry controls the current supplied to the electrode 70, 71, 72 as will be explained with reference to an electrocution cycle described below.

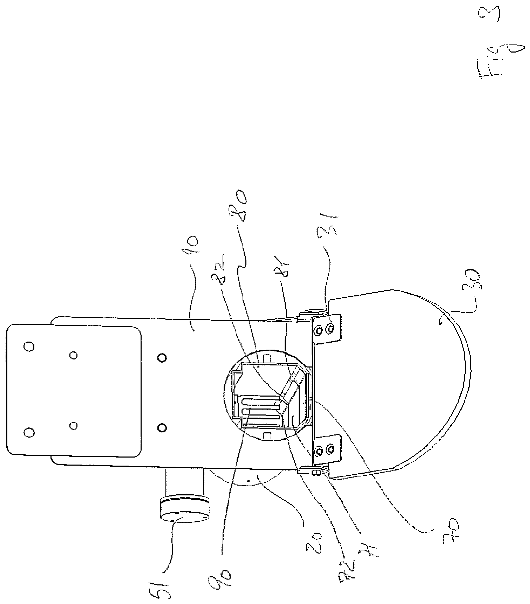

In figure 3 is illustrated a further view of the device according to the invention.

Visible inside the tunnel element 20 partly shielded by the chassis 10 is an inner pipe element 80.

The electrodes 70, 71, 72 can clearly be identified at the bottom of the inner pipe element 80. Between each electrode 70, 71, 72 is provided a gap 81, 82 in the wall of the inner pipe element which gap 81, 82 is present in the bottom part of the inner pipe element 80 and partly up the vertical side limitations of the inner pipe element 80. In this manner any moisture entering the inner pipe element 80 will drain off the inner walls and the electrodes 70, 71, 72 into the space between the inner pipe element 80 and the tunnel element 20. In this manner it is ensured that no leak currents will be created between the three electrodes 70, 71, 72.

Furthermore, the activating means 90 are visible inside the inner pipe element 80. As the pest and in particular a rat engages the activating means 90 this will be registered by a sensor, typically a magnet with a Hall element which will instigate the electrocution cycle thereby providing a current to the electrodes 70, 71, 72 such that the pest is electrocuted. The Hall-element is arranged in an upper part of the tunnel element 20 or pipe element, such that turning of the activating means will cause the Hall element to register a difference in the electrical field between the activating means and the Hall element, which will trigger initiation of the electrocution cycle.

As an alternative to the activating means being a suspended member inside the tunnel element 20, the electrodes may be used as detection means. As the conductivity or electrical resistance changes between two electrodes when a pest/rat steps on two electrodes, this may be used as an indication that a rat is present in the device, thereby initiating the electrocution cycle.
After having been electrocuted the tunnel element 20 will move from the first position as depicted in figure 1 into its second position as depicted in figure 2 due to rotation of the axle 12. This rotation is provided by the motor 51 arranged above the tunnel element 20 in order to pivot the tunnel element 20 back and forth between the first and second positions.

Turning to the mounting of the inventive pest electrocution device this will be described with reference to figure 4. The pest electrocution device is in this illustration simplified in that only the shield 13, the tunnel element 20 and the chassis 10 in combination with the transformer 50 is illustrated.

When installing the pest electrocution device 1 in a branch pipe 2 through a manhole 3, here shown in phantom lines, the mounting tool 60 is used. The mounting tool 60 is attached to either the chassis 10 or the transformer 50 by suitable attachment means such that the electrocution device 1 may be lowered into the manhole 3 and the shield 13 inserted into the branch pipe 2.

As the mounting tool 60 is provided with a resilient section 61 which in this embodiment is an extendable spring member housed inside a cylinder such that the distance between the mounting tool section 60' and 60" may be varied. In the opposite end of the attachment tool to the end attached to the pest electrocution device a hook 62 is provided. In this embodiment the hook 62 is fastened to the rim 3' of the manhole 3 such that the tension element 61 of the mounting tool is extended whereby tension is created in the mounting tool 60 whereby the shield 13 is urged against an upper section of the branch pipe 2 such that the device 1 is fixed relative to the manhole 3 and the branch pipe 2. Naturally, the hook 62 may have a different shape, or the hook may be attached to a suitable bracket provided on an inner wall of the manhole 3. In this connection also a battery 90 powering the device 1 may be attached in connection with the upper end of the mounting tool 60 or adjacent the upper rim of the manhole, such that the battery is easily accessible from the ground surface.

In embodiments where the source of energy is a rechargeable battery, the electronic circuitry, i.e. the control unit is advantageously arranged in the battery box 90, together with any communication means such as for example a GSM unit and/or a display. The advantage of arranging the electronic circuitry adjacent the rim of the manhole is that the fragile circuitry is removed from the harsh environment in the sewer, and as such is not exposed to the same severe influences as are present closer to the liquid in the sewer.

In embodiments where the power is supplied by a grid connection, the electronic circuitry may be mounted in a box adjacent the rim of the manhole 3, or in the connection box 50 on the device.

The communication means is typically used in embodiments where a number of devices are installed in a relatively large area, such as a town, part of a city or the like. Where a display is arranged the display will typically indicate status of the device, number of activations (i.e. electrocution cycles), last date for cleaning/maintenance of device etc. The possibility to communicate status, faults, activations, etc of the device, makes managing a rodent protection system much easier and reliable.

The electrocution device works in the following manner: When a rat travels against the flow of liquid as indicated by the arrow 40 in figure 1, it will at some point arrive at the ramp 30. The rat will travel up the ramp 30 and enter the tunnel element 20 through an opening 21 in the chassis 10. As the rat enters the tunnel element 20 whether or not an inner pipe element 80 as described with reference to figure 3 is provided, the rat will walk on the electrodes 70, 71, 72 and at some point touch and move the activating means 90, see figure 3, whereby an electrocution cycle is initiated. During the electrocution cycle the electrodes will be supplied with approximately 4,000 V which quickly will reduce to approx. 150 V. Total "power time" is approximately 2 minutes after which tests indicate that the rat is effectively electrocuted and dead.

Electronic circuitry including a micro processor provided in the electrical connection box/transformer box 50 will register the rat touching the activation means 90 and initiate the electrocution cycle. After the two-minute period of supplying power to the electrodes the current will be cut off to the electrodes, and the motor 51 will be activated in order to bring the tunnel elements from the first position as illustrated in figure 1 to the second position as illustrated with reference to figure 2. In the second position the rat will slide out of the tunnel element into the bottom of the branch pipe 2 where liquid in the sewer pipe will wash the rat away. After the rat has left the tunnel element 20 or a period of approx. 30 seconds the tunnel element will due to activation of the motor 51 pivot back into the first position and be ready for the next pest.

In this context it should be noted that the second position of the tunnel element is illustrated in figure 20 may be maintained for a shorter or longer period. The longer period serves to drain any liquid/moisture out of the mechanism and away from the electrodes such that a reliable functioning of the electrodes is achieved.

In some embodiments the ramp 30 is illustrated as being substantially vertical and not a continuous plate member, i.e. it comprises a plurality of fingers. These embodiments are suitable for small dimension sewer pipes. A typical rat is 200 mm or more long and will be able standing on its hind legs to climb into the tunnel. Furthermore rats are relatively good at jumping, and as such will easily jump from the bottom of the sewer and into the tunnel. On the other hand having a solid buoyant ramp will entice the rats to enter. Therefore both embodiments are used.

Above one embodiment of the invention has been explained with reference to the accompanying drawings, but it should be noted that the scope of protection is only to be limited by the appended claims.

## Claims

1. Pest electrocution device (1), suitable to be mounted in a pipe or conduit (2), wherein the electrocution device (1) comprises a ramp (30) hingely attached to a chassis (10), which chassis (10) has means to be fastened to said pipe or conduit, where said chassis (10) further comprises a chassis arm (11), and a tunnel element (20), which tunnel element (20) is pivotably fastened to said chassis arm (11), and where the tunnel element (20) in a first position extends to an upper end of said ramp (30), such that a pest travelling up the ramp (30) can enter the tunnel element (20) at a first end (21), where activating means (90) are provided inside the tunnel element (20), which activation means (90) are suitable to activate at least three electrodes (70,71,72) by supplying electrical current to said electrodes (70,71,72) arranged as separate floor plates in the tunnel (20), **characterized in that** after activation and a predetermined period of time, the tunnel element (20) is suitable to pivot the first end (21) downwards into a second position, in which second position the electrocuted pest slides out of the tunnel element (20), after which the tunnel element (20) is suitable to be pivoted back in its first position.

2. Pest electrocution device according to claim 1, wherein the tunnel (20) is hingely connected to the chassis arm (11) by means of an axle (12) and where a motor (51) is attached to the axle (12) for rotation of said axle (12), where the motor (51) is controlled by a control unit, which control unit receives input from the activating means (90) inside the tunnel (20), where the motor (51) pivots the tunnel (20) between the first position and the second position.

3. Pest electrocution device according to claim 2 wherein the axle (12) is arranged on an upper side of the tunnel element (20), such that the tunnel element (20) is substantially horizontal, when not influenced by the motor (51).

4. Pest electrocution device according to claim 1, wherein the ramp (30) is made from a buoyant material, such as polyurethane, wood, or plastic, preferably a hollow buoyant plastic construction.

5. Pest electrocution device according to any of claims 1 to 4, wherein inside the tunnel (20) a further pipe element (80) is coaxially arranged, such that a pest entering the device (1) via the ramp (30) will enter the pipe element (80), where the at least three electrodes (70,71,72) are suspended or placed on the floor of the pipe element (80) with a gap (81,82) between each electrode (70,71,72), and where superposed the gaps (70,71,72) an aperture is provided in the pipe elements' bottom and a vertical distance up the pipe element (20), where the vertical distance is larger than the vertical extent of the electrodes (70,71,72).

6. Pest electrocution device according to any preceding claim, wherein the activating means (90) is a member suspended in the tunnel (20) or pipe element (80), which member (90) is engaged by the pest after entering the tunnel (20) or pipe element(80), where said member (90) has downwards projecting resilient sub-elements, where the activation of the activating means (90) occurs when the member (90) suspended in the tunnel (20,80) is rotated relative to the tunnel axis.

7. Pest electrocution device according to any of claims 2 to 6, wherein a transformer (50) is provided on the chassis arm (11), where said transformer (50) is electrically connected to a source of electricity, and where said control unit controls the transformer (50) to supply power to the electrodes (70,71,72) and the motor (51), where the electrodes (70,71,72) initially is provided with a voltage of at least 3000 V, more preferred more than 3500 V and most preferred 4000V or more, and where the voltage decreases to between 100 to 300 V, more preferred 120 to 180 V and most preferred 130 to 160 V, and that the current increases during the electrocution cycle.

8. Pest electrocution device according to any preceding claim, wherein a mounting shield (13) is provided projecting from the chassis (10), where said shield (13) projects in a direction opposite to the tunnel (20), where the mounting shield (13) has a shape corresponding to an upper section of the pipe or conduit (2) into which the device (1) is to be mounted.

9. Pest electrocution device according to any preceding claim wherein the ramp (30) is pivotably arranged on the chassis (10), and where a counterweight is provided in connection with the ramp (30).

10. Method of electrocuting a pest such as a rat or other rodent present in a pipe or conduit, where a pest electrocution device (1) according to any of claims 1 to 9 is arranged in the pipe or conduit (2), such that the ramp (30) blocks a substantial part of the pipe's or conduit's cross section, where the pest will travel up the ramp (30) and into the device (1), where when the pest moves the activating means (90) suspended in the tunnel (20) or pipe element (80) an input is generated and transmitted to the control unit, which control unit activates the transformer (50) to initially supply the electrodes (70,71,72) with a current for approx 120 seconds after which the motor means (50) is activated, rotating the tunnel (20) from the first position to the second position, in which second position the electrocuted pest slides out of the tunnel (20) or pipe element (80), after which the tunnel (20) pivots back into its first position.

11. Method for mounting a pest electrocution device (1) according to claim 8 in a manhole (3) having branch pipes or conduits (2), where on an upper part of the device (1) an attachment device is provided for a mounting tool (60), where the mounting shield (13) on the chassis (10) is inserted in a branch pipe or conduit (2), and the mounting tool (60) comprises at least one resilient section (61), such that one end of the mounting tool (60), when the other end is mounted on the attachment device, may be extended to the rim (3') or immediately adjacent the rim (3') where the resilient section creates tension in the mounting tool (60), for releasably fastening to the manhole (3), thereby squeezing the mounting shield (13) against an upper part of the branch pipe or conduit (2), thereby fastening the device (1) relative to the branch pipe or conduit (2).

## Patentansprüche

1. Vorrichtung zur Tötung von Schädlingen durch Stromschläge (1), die geeignet ist, um in einem Rohr oder einer Leitung (2) montiert zu werden, wobei die Stromschlag-Vorrichtung (1) eine Rampe (30) umfasst, die gelenkig an einem Gehäuse (10) befestigt ist, wobei das Gehäuse (10) ein Mittel aufweist, um an dem Rohr oder der Leitung angebracht zu werden, wobei das Gehäuse (10) ferner einen Gehäusearm (11) und ein Tunnelelement (20) umfasst, wobei das Tunnelelement (20) schwenkbar an dem Gehäusearm (11) angebracht ist, und wobei das Tunnelelement (20) sich in einer ersten Position in Richtung eines oberen Endes der Rampe (30) erstreckt, sodass ein Schädling, der sich die Rampe (30) hinaufbewegt, das Tunnelelement (20) an einem ersten Ende (21) betreten kann, wobei ein Aktivierungsmittel (90) innerhalb des Tunnelelements (20) bereitgestellt ist, wobei das Aktivierungsmittel (90) geeignet ist, um
wenigstens drei Elektroden (70, 71, 72) durch ein Liefern eines elektrischen Stroms an die Elektroden (70, 71, 72) zu aktivieren, die als separate Bodenplatten in dem Tunnel (20) angeordnet sind, **dadurch gekennzeichnet, dass** nach dem Aktivieren und für eine vorbestimmte Zeitspanne das Tunnelelement (20) geeignet ist, um das erste Ende (21) nach unten in eine zweite Position zu schwenken, wobei in der zweiten Position der durch einen Stromschlag getötete Schädling aus dem Tunnelelement (20) gleitet, wobei das Tunnelelement (20) danach geeignet ist, um in seine erste Position zurück geschwenkt zu werden.

2. Vorrichtung zur Tötung von Schädlingen durch Stromschläge nach Anspruch 1, wobei der Tunnel (20) mittels einer Achse (12) gelenkig mit dem Gehäusearm (11) verbunden ist, und wobei ein Motor (51) für eine Rotation der Achse (12) an der Achse (12) befestigt ist, wobei der Motor (51) von einer Steuereinheit gesteuert wird, wobei die Steuereinheit eine Eingabe von dem Aktivierungsmittel (90) innerhalb des Tunnels (20) empfängt, wobei der Motor (51) den Tunnel (20) zwischen der ersten Position und der zweiten Position schwenkt.

3. Vorrichtung zur Tötung von Schädlingen durch Stromschläge nach Anspruch 2, wobei die Achse (12) an einer Oberseite des Tunnelelements (20) angeordnet ist, sodass das Tunnelelement (20) im Wesentlichen horizontal ist, wenn es nicht von dem Motor (51) beeinflusst wird.

4. Vorrichtung zur Tötung von Schädlingen durch Stromschläge nach Anspruch 1, wobei die Rampe (30) aus einem schwimmfähigen Material wie Polyurethan, Holz oder Kunststoff, vorzugsweise einer hohlen schwimmfähigen Kunststoffkonstruktion besteht.

5. Vorrichtung zur Tötung von Schädlingen durch Stromschläge nach einem der Ansprüche 1 bis 4, wobei innerhalb des Tunnels (20) ein weiteres Rohrelement (80) koaxial angeordnet ist, sodass ein Schädling, der die Vorrichtung (1) über die Rampe (30) betritt, das Rohrelement (80) betritt, wobei die wenigstens drei Elektroden (70, 71, 72) mit einem Spalt (81, 82) zwischen jeder Elektrode (70, 71, 72) herabhängen oder am Boden des Rohrelements (80) platziert sind, und wobei eine die Spalte (81, 82) überlagernde Öffnung im Boden des Rohrelements und ein vertikaler Abstand nach oben in dem Rohrelement (20) bereitgestellt sind, wobei der vertikale Abstand größer ist als die vertikale Erstreckung der Elektroden (70, 71, 72).

6. Vorrichtung zur Tötung von Schädlingen durch Stromschläge nach einem der vorhergehenden Ansprüche, wobei das Aktivierungsmittel (90) ein Bauteil ist, das in dem Tunnel (20) oder dem Rohrelement (80) herabhängt, wobei das Bauteil (90) von dem Schädling nach dem Betreten des Tunnels (20) oder des Rohrelements (80) bewegt wird, wobei das Bauteil (90) nach unten hervorstehende elastische Teilelemente aufweist, wobei das Aktivieren des Aktivierungsmittels (90) geschieht, wenn das Bauteil (90), das in dem Tunnel (20, 80) herabhängt, relativ zu der Tunnelachse gedreht wird.

7. Vorrichtung zur Tötung von Schädlingen durch Stromschläge nach einem der Ansprüche 2 bis 6, wobei ein Transformator (50) an dem Gehäusearm (11) bereitgestellt ist, wobei der Transformator (50) elektrisch mit einer Elektrizitätsquelle verbunden ist, und wobei die Steuereinheit den Transformator (50) steuert, um eine Leistung an die Elektroden (70, 71, 72) und den Motor (51) zu liefern, wobei an die Elektroden (70, 71, 72) initial eine Spannung von wenigstens 3000 V, mehr bevorzugt mehr als 3500 V und am meisten bevorzugt 4000 V oder mehr bereitgestellt wird, und wobei die Spannung auf zwischen 100 und 300 V, mehr bevorzugt 120 bis 180 V und am meisten bevorzugt 130 bis 160 V absinkt, und wobei der Strom während des Stromschlagzyklus ansteigt.

8. Vorrichtung zur Tötung von Schädlingen durch Stromschläge nach einem der vorhergehenden Ansprüche, wobei eine Montageblende (13) hervorstehend von dem Gehäuse (10) bereitgestellt ist, wobei die Blende (13) in eine Richtung entgegensetzt dem Tunnel (20) hervorsteht, wobei die Montageblende (13) eine Form entsprechend einem oberen Bereich des Rohrs oder der Leitung (2) aufweist, in dem die Vorrichtung (1) montiert werden soll.

9. Vorrichtung zur Tötung von Schädlingen durch Stromschläge nach einem der vorhergehenden Ansprüche, wobei die Rampe (30) schwenkbar an dem Gehäuse (10) angeordnet ist, und wobei ein Gegengewicht in Verbindung mit der Rampe (30) bereitgestellt ist.

10. Verfahren zur Tötung eines Schädlings wie einer Ratte oder eines anderen in einem Rohr oder einer Leitung anwesenden Nagers durch Stromschläge, wobei eine Vorrichtung zur Tötung von Schädlingen durch Stromschläge (1) nach einem der Ansprüche 1 bis 9 in dem Rohr oder der Leitung (2) derartig angeordnet ist, dass die Rampe (30) einen wesentlichen Teil des Querschnitts des Rohrs oder der Leitung blockiert, wobei der Schädling sich die Rampe (30) hinauf und in die Vorrichtung (1) bewegt, wobei, wenn der Schädling das Aktivierungsmittel (90) bewegt, das in dem Tunnel (20) oder dem Rohrelement (80) herabhängt, eine Eingabe erzeugt und an die Steuereinheit übertragen wird, wobei die Steuereinheit den Transformator (50) aktiviert, um zuerst einen Strom von etwa 120 Sekunden an die Elektroden (70, 71, 72) zu liefern, wobei danach das Transformator (50) aktiviert wird, um den Tunnel (20) von der ersten in die zweite Position zu drehen, wobei in der zweiten Position der durch Stromschläge getötete Schädling aus dem Tunnel (20) oder dem Rohrelement (80) gleitet, wonach der Tunnel (20) zurück in seine erste Position schwenkt.

11. Verfahren zur Montage einer Vorrichtung zur Tötung von Schädlingen durch Stromschläge (1) nach Anspruch 8 in einem Schacht (3), der Abzweigrohre oder Leitungen (2) aufweist, wobei an einem Oberteil der Vorrichtung (1) eine Befestigungsvorrichtung für ein Montagewerkzeug (60) bereitgestellt ist, wobei die Montageblende (13) an dem Gehäuse (10) in ein Abzweigrohr oder eine Leitung (2) eingeführt wird, und wobei das Montagewerkzeug (60) wenigstens einen elastischen Bereich (61) umfasst, sodass dieses eine Ende des Montagewerkzeugs (60), wenn das andere Ende an der Befestigungsvorrichtung montiert ist, in der Lage ist,
bis zu dem Rand (3') oder unmittelbar benachbart zu dem Rand (3') verlängert zu werden, wo der elastische Bereich eine Spannung in dem Montagewerkzeug (60) hervorruft, zum lösbaren Anbringen an dem Schacht (3), wodurch es die Montageblende (13) gegen einen Oberteil des Abzweigrohrs oder der Leitung (2) drückt, wodurch die Vorrichtung (1) relativ zu dem Abzweigrohr oder der Leitung (2) angebracht wird.

## Revendications

1. Dispositif d'électrocution d'animaux nuisibles (1), adéquat pour être monté dans un tuyau ou conduit (2), dans lequel le dispositif d'électrocution (1) comprend une rampe (30) reliée par des charnières à un châssis (10), lequel châssis (10) a des moyens à fixer audit tuyau ou conduit, où ledit châssis (10) comprend en outre un bras de châssis (11), et un élément en forme de tunnel (20), lequel élément en forme de tunnel (20) est fixé de manière pivotante audit bras de châssis (11), et où l'élément en forme de tunnel (20) dans une première position s'étend vers une extrémité supérieure de ladite rampe (30), de sorte qu'un animal nuisible gravissant la rampe (30) peut entrer dans l'élément en forme de tunnel (20) au niveau d'une première extrémité (21), où un moyen d'activation (90) est fourni à l'intérieur de l'élément en forme de tunnel (20), lequel moyen d'activation (90) est adéquat pour activer au moins trois électrodes (70, 71, 72) en approvisionnant en courant électrique lesdites électrodes (70, 71, 72) agencées en tant que plaques de plancher séparées dans le tunnel (20), **caractérisé en ce que**, après l'activation et un laps de temps prédéterminé, l'élément en forme de tunnel (20) est adéquat pour faire pivoter la première extrémité (21) vers le bas dans une seconde position, dans laquelle seconde position l'animal nuisible électrocuté glisse hors de l'élément en forme de tunnel (20), après quoi l'élément en forme de tunnel (20) est adéquat pour être pivoté pour revenir dans sa première position.

2. Dispositif d'électrocution d'animaux nuisibles selon la revendication 1, dans lequel le tunnel (20) est raccordé par des charnières au bras de châssis (11) au moyen d'un axe (12) et où un moteur (51) est relié à l'axe (12) pour une rotation dudit axe (12), où le moteur (51) est commandé par une unité de commande, laquelle unité de commande reçoit une entrée en provenance du moyen d'activation (90) à l'intérieur du tunnel (20), où le moteur (51) fait pivoter le tunnel (20) entre la première position et la seconde position.

3. Dispositif d'électrocution d'animaux nuisibles selon la revendication 2, dans lequel l'axe (12) est agencé sur un côté supérieur de l'élément en forme de tunnel (20), de sorte que l'élément en forme de tunnel (20) est sensiblement horizontal, lorsqu'il n'est pas influencé par le moteur (51).

4. Dispositif d'électrocution d'animaux nuisibles selon la revendication 1, dans lequel la rampe (30) est faite d'un matériau pouvant flotter, tel que le polyuréthane, le bois ou le plastique, de préférence une construction en plastique pouvant flotter creuse.

5. Dispositif d'électrocution d'animaux nuisibles selon l'une quelconque des revendications 1 à 4, dans lequel à l'intérieur du tunnel (20) un élément en forme de tuyau supplémentaire (80) est agencé coaxialement, de sorte qu'un animal nuisible entrant dans le dispositif (1) via la rampe (30) entrera dans l'élément en forme de tuyau (80), où les au moins trois électrodes (70, 71, 72) sont suspendues ou placées sur le plancher de l'élément en forme de tuyau (80) avec un espace (81, 82) entre chaque électrode (70, 71, 72), et où les espaces (70, 71, 72) sont superposés, une ouverture est fournie dans le fond des éléments en forme de tuyaux et une distance verticale en haut de l'élément en forme de tuyau (20), où la distance verticale est plus grande que l'étendue verticale des électrodes (70, 71, 72).

6. Dispositif d'électrocution d'animaux nuisibles selon une quelconque revendication précédente, dans lequel le moyen d'activation (90) est un organe suspendu dans le tunnel (20) ou l'élément en forme de tunnel (80), lequel organe (90) est enclenché par l'animal nuisible après l'entrée dans le tunnel (20) ou l'élément en forme de tuyau (80), où ledit organe (90) a des sous-éléments élastiques faisant saillie vers le bas, où l'activation du moyen d'activation (90) se produit lorsque l'organe (90) suspendu dans le tunnel (20, 80) tourne par rapport à l'axe de tunnel.

7. Dispositif d'électrocution d'animaux nuisibles selon l'une quelconque des revendications 2 à 6, dans lequel un transformateur (50) est fourni sur le bras de châssis (11), où ledit transformateur (50) est raccordé électriquement à une source d'électricité, et où ladite unité de commande commande le transformateur (50) pour approvisionner en puissance les électrodes (70, 71, 72) et le moteur (51), où les électrodes (70, 71, 72) sont initialement pourvues d'une tension d'au moins 3 000 V, de préférence supérieure à 3 500 V et de manière préférée entre toutes de 4 000 V ou plus, et où la tension diminue jusqu'à entre 100 à 300 V, de préférence de 120 à 180 V et de manière préférée entre toutes de 130 à 160 V, et le courant augmente pendant le cycle d'électrocution.

8. Dispositif d'électrocution d'animaux nuisibles selon une quelconque revendication précédente, dans lequel une protection de montage (13) est fournie faisant saillie du châssis (10), où ladite protection (13) fait saillie dans une direction opposée au tunnel (20), où la protection de montage (13) a une forme correspondant à une section supérieure du tuyau ou conduit (2) dans lequel le dispositif (1) doit être monté.

9. Dispositif d'électrocution d'animaux nuisibles selon une quelconque revendication précédente, dans lequel la rampe (30) est agencée de manière pivotante sur le châssis (10), et où un contrepoids est fourni en relation avec la rampe (30).

10. Procédé d'électrocution d'un animal nuisible tel qu'un rat ou un autre rongeur présent dans un tuyau ou un conduit, où un dispositif d'électrocution d'animaux nuisibles (1) selon l'une quelconque des revendications 1 à 9 est agencé dans le tuyau ou conduit (2), de sorte que la rampe (30) bloque une partie substantielle de la section transversale du tuyau ou conduit, où l'animal nuisible gravira la rampe (30) et entrera dans le dispositif (1), où lorsque l'animal nuisible déplace le moyen d'activation (90) suspendu dans le tunnel (20) ou l'élément en forme de tuyau (80), une entrée est générée et transmise à l'unité de commande, laquelle unité de commande active le transformateur (50) pour approvisionner initialement les électrodes (70, 71, 72) en courant pendant approximativement 120 secondes, après quoi le moyen moteur (50) est activé, faisant tourner le tunnel (20) de la première position à la seconde position, dans laquelle seconde position l'animal électrocuté glisse hors du tunnel (20) ou de l'élément en forme de tuyau (80), après quoi le tunnel (20) pivote pour revenir dans sa première position.

11. Procédé pour monter un dispositif d'électrocution d'animaux nuisibles (1) selon la revendication 8 dans un regard (3) ayant des tuyaux ou conduits de branchement (2), où sur une partie supérieure du dispositif (1) un dispositif de liaison est fourni pour un outil de montage (60), où la protection de montage (13) sur le châssis (10) est insérée dans un tuyau ou conduit de branchement (2), et l'outil de montage (60) comprend au moins une section élastique (61), de sorte qu'une extrémité de l'outil de montage (60), lorsque l'autre extrémité est montée sur le dispositif de liaison, peut être étendue jusqu'à la bordure (3') ou de manière immédiatement adjacente à la bordure (3') lorsque la section élastique crée une tension dans l'outil de montage (60), pour une fixation amovible au regard (3), serrant ainsi la protection de montage (13) contre une partie supérieure du tuyau ou conduit de branchement (2), fixant ainsi le dispositif (1) par rapport au tuyau ou conduit de branchement (2) .
